# EUROPÄISCHE PATENTSCHRIFT

(11) **EP 1 905 502 B1**
(45) Veröffentlichungstag und Bekanntmachung des Hinweises auf die Patenterteilung: **28.07.2010**
(21) Anmeldenummer: 07113441.5
(22) Anmeldetag: 30.07.2007
(51) Int. Cl.: B01D 46/24, B01D 50/00, B01D 46/00, B01D 46/52

(54) **Filtereinrichtung**
Filter device
Dispositif de filtre

(30) Priorität: 27.09.2006 DE 202006014960 U
(43) Veröffentlichungstag der Anmeldung: 02.04.2008
(73) Patentinhaber: MANN+HUMMEL GmbH, 71638 Ludwigsburg (DE)
(72) Erfinder: Walz, Stefan, 71691 Freiberg (DE)

(56) Entgegenhaltungen:
- WO-A-2005/095783
- WO-A-2006/096466
- DE-A1- 3 117 625
- GB-A- 2 064 359
- US-B1- 6 258 144

## Beschreibung

### Technisches Gebiet

Die Erfindung bezieht sich auf eine Filtereinrichtung, insbesondere zur Filtration von Verbrennungsluft in Brennkraftmaschinen, nach dem Oberbegriff des Anspruches 1.

### Stand der Technik

Die Schrift GB2064359A zeigt eine Filteranordnung mit einem Vorabscheider und einem Filterelement in einem Gehäuse. Das Gehäuse weist über die gesamte Länge einen gleichbleibenden Durchmesser auf und ist in Verlängerung des Filterelementes an der Stirnseite geschlossen. Dabei strömt in Strömungsrichtung vor dem Filterelement die Rohluft seitlich in die Filteranordnung ein. Die Rohluft durchströmt zunächst einen aus separaten Bauteilen gebildeten Vorabscheider, der mittels einer in der Strömung stehenden feststehenden Leitgeometrie der Luftströmung einen Drall aufprägt. Im Dokument DE3117625A1 ist ein Rundfilterelement in einem Blechgehäuse offenbart. Es wird ein zylindrischer oder auch konischer Filtereinsatz gezeigt, der in einem zylindrischen aus mehreren Blechteilen zusammengebördelten Gehäuse angeordnet ist. Der Lufteintritt erfolgt stirnseitig an Lufteinlässen, die radial außerhalb des Luftfilterelementes an der Stirnseite angeordnet sind. Zum Erreichen einer Vorfiltrierung wird vorgeschlagen, auf der Filtereintrittsseite als Öffnungen Lufteinlasskiemen vorzusehen, die der Luft eine Wirbelbewegung um den Filtereinsatz herum verleihen. Ein größerer Durchmesser des Gehäuses liegt im Bereich der Rohluft während ein kleinerer Durchmesser nur von der Reinluft durchströmt wird.
Die Schrift WO2006/096466A offenbart gewellte Filterelemente und deren Herstellung aus porösen Strukturen.
In der EP 0 450 299 A1 wird eine Filtereinrichtung zur Filtration von Verbrennungsluft in Brennkraftmaschinen beschrieben, die ein plattenförmiges, zickzackförmig gefaltetes Filterelement in einem Filtergehäuse umfasst. Die zu reinigende Rohluft wird dem Filterelement im Filtergehäuse zugeführt und durchströmt das Filterelement, wobei Staub- und Wasserpartikel in den Falten des Filterelementes ausgesondert werden. Die Reinluft wird in den Ansaugtrakt der Brennkraftmaschine geleitet.

Insbesondere bei feuchter Witterung kann die aus der Umgebung zugeführte Verbrennungsluft einen hohen Feuchtigkeitsanteil enthalten, der an dem Filterelement abgeschieden wird. Eine Durchfeuchtung des Filterelementes kann jedoch zu Beschädigungen des Filtermaterials und zu Beeinträchtigungen der Filtrationsleistung führen.

### Offenbarung der Erfindung

Der Erfindung liegt die Aufgabe zugrunde, mit einfachen konstruktiven Maßnahmen eine Filtereinrichtung mit dauerhaft hoher Filtrationsleistung zu schaffen. Dies soll vorteilhafterweise auch mit einer Verbesserung der akustischen Verhältnisse einhergehen.

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung, die zur Filtrierung von gasförmigen Fluiden, insbesondere von Verbrennungsluft in Brennkraftmaschinen verwendet wird, weist ein schlauchförmiges Filterelement auf, welches radial von dem zu reinigenden Fluid durchströmt wird. Dieses schlauchförmige Filterelement ist in einem Leitrohr angeordnet, das zwei Rohrabschnitte unterschiedlichen Durchmessers aufweist, in deren Übergang eine Ringschulter zur Abscheidung von Partikeln angeordnet ist. Das zu reinigende Fluid wird über den größeren Rohrabschnitt herbeigeführt, wobei sich das Filterelement zumindest teilweise bis in diesen größeren Rohrabschnitt hinein erstreckt. Des Weiteren ist im größeren Rohrabschnitt eine Dralleinrichtung angeordnet, welche geeignet ist, dem herangeführten Fluidstrom einen Drall aufzuprägen.

Aufgrund des Dralls in dem über den größeren Rohrabschnitt herangeführten Fluidstrom wird dieser in Rotation versetzt, so dass die schwereren, im Fluidstrom mitgeführten Partikel durch die Zentrifugalkraft radial nach außen geleitet werden. Im Übergang zwischen radial größerem Rohrabschnitt zu radial kleinerem Rohrabschnitt des Leitrohres besteht eine Ringschulter, an der die mitgeführten und radial nach außen geleiteten Partikel abgeschieden werden. Der von diesen Partikeln gereinigte Fluidstrom wird anschließend in den kleineren Rohrabschnitt geleitet und schließlich aus der Filtereinrichtung abgeleitet.

Der Übergang von größerem zu kleinerem Rohrabschnitt stellt eine konstruktiv sehr einfach zu realisierende Anschlag- bzw. Prallfläche dar, welche zur Abscheidung der Feuchtigkeits- und Schmutzpartikel aus dem Fluidstrom genutzt werden kann. Die abgeschiedenen Partikel können anschließend aus dem Leitrohr abgeleitet werden.

Ein weiterer Vorteil liegt in der Verbesserung der akustischen Verhältnisse. Die Änderung des Durchmessers im Übergang von kleinerem zu größerem Rohrabschnitt hat eine zusätzliche Schalldämpfung und eine reduzierte Schallweiterleitung axial in Richtung des größeren Rohrabschnittes zur Folge, so dass insgesamt ein geringerer Geräuschpegel erreicht wird. Darüber hinaus wird eine weitere Verbesserung erreicht, indem das kleinere Rohr ein Stück weit in das größere hineinragt.

Der Übergang von größerem zu kleinerem Rohrabschnitt kann sprungartig erfolgen, in diesem Fall ist der Übergang als scheibenförmige Platte mit ausschließlich radialer Ausrichtung ausgebildet. Alternativ hierzu ist es aber auch möglich, in Achsrichtung einen kontinuierlichen bzw. schrittweisen radialen Übergang zwischen den Rohrabschnitten zu schaffen. Hierbei kann es insbesondere auch zweckmäßig sein, im größeren Rohrabschnitt zunächst eine radiale Erweiterung auszubilden, die sich im weiteren Verlauf in Richtung kleinerer Rohrabschnitt radial so weit verjüngt, bis der Durchmesser des kleineren Rohrabschnittes erreicht ist. Die radiale Erweiterung hat die Funktion einer Aussackung zur Aufnahme und Ableitung der im Fluidstrom mitgeführten, schwereren Partikel, insbesondere der Wassertröpfchen.

Das schlauchförmige, axial angeordnete Filterelement erstreckt sich zweckmäßig axial mit einem Teil in den größeren Rohrabschnitt und einem Teil in den kleineren Rohrabschnitt. Auf diese Weise wird der Übergang zwischen den Rohrabschnitten überbrückt. Gemäß einer weiteren bevorzugten Ausführung ist der Durchmesser des Filterelementes kleiner als der Innendurchmesser des kleineren Rohrabschnittes, so dass zwischen äußerer Mantelfläche des schlauchförmigen Filterelementes und Innenmantel des kleineren Rohrabschnittes ein Ringraum für das Fluid gebildet ist. Bei einer Anströmung des Filterschlauches radial von außen nach innen wird daher das über den größeren Rohrabschnitt axial herangeführte Fluid zunächst über die Dralleinrichtung in Rotation versetzt. Die Partikel im Fluid werden daraufhin im Übergangsabschnitt von größerem zu kleinerem Rohrabschnitt vorabgeschieden und das von den groben Partikeln vorgereinigte Fluid durchdringt radial die Wandung des Filterelementes, und zwar zum einen axial im Bereich des größeren Rohrabschnitts, zum anderen strömt das gereinigte Fluid axial in den Ringraum zwischen kleinerem Rohrabschnitt und Filterelement und dringt von dort ebenfalls radial durch die Wandung des Filterelementes. In dieser Ausführung besteht also die Möglichkeit, dass das Fluid sowohl im größeren Rohrabschnitt als auch im kleineren Rohrabschnitt an der Rohseite des Filterelementes filtriert wird, wodurch insgesamt eine größere Filterfläche zur Verfügung steht.

Gemäß einer alternativen Ausführung kann es aber auch zweckmäßig sein, das ungereinigte Fluid über den Innenraum des Filterschlauches heranzuführen und zunächst an der Wandung des Filterschlauches zu filtrieren, indem das Fluid die Filterwandung radial von innen nach außen durchströmt. Auf der radial außen liegenden Reinseite des Filterschlauches wird das Fluid über die Dralleinrichtung in Rotation versetzt, woraufhin sich die Restfeuchte im Fluid sowie verbliebene Partikel an der Innenwandung des größeren Rohrabschnittes bzw. einer Abscheidewand und/oder der Wandung im Übergangsbereich von größerem zu kleinerem Rohrabschnitt ablagern. Im weiteren Verlauf wird das Fluid axial durch den Ringraum zwischen Innenmantel von größerem und kleinerem Rohrabschnitt und Außenseite des Filterschlauches abgeleitet.

Um den Abscheidegrad zu verbessern, ist zweckmäßig eine zusätzliche Abscheidewand im Übergangsbereich von größerem zu kleinerem Rohrabschnitt vorgesehen. Diese Abscheidewand erstreckt sich vorteilhaft axial, sie wird beispielsweise durch axiales Einragen des kleineren Rohrabschnittes in den größeren Rohrabschnitt gebildet. In dieser Ausführung stellt die Abscheidewand den von dem kleineren Rohrabschnitt gebildeten stirnseitigen Rohrstutzen dar, der axial in den größeren Rohrabschnitt einragt. Zwischen der Außenseite dieses einragenden Stutzens und dem Innenmantel des größeren Rohrabschnittes ist ein ringförmiger Abscheideraum gebildet.

Die Dralleinrichtung, über die dem herangeführten Fluid ein Drall aufgeprägt wird, kann entweder als konstruktiver Bestandteil des größeren Rohrabschnittes oder des in den größeren Rohrabschnitt einragenden Filterschlauches ausgebildet sein. Im erstgenannten Fall ist die Dralleinrichtung beispielsweise als gewellte Innenwandung des größeren Rohrabschnittes ausgeführt, wobei die Wellung insbesondere spiralförmig verläuft, wodurch die Erzeugung des Dralls erheblich verbessert wird. Möglich ist aber auch, an der Innenwandung des größeren Rohrabschnittes ein separates, den Drall erzeugendes Bauteil vorzusehen.

In der zweitgenannten Ausführung bildet die Dralleinrichtung einen Bestandteil des im größeren Rohrabschnitt befindlichen Teil des Filterschlauches. Dies wird zweckmäßig durch Falten in der Wandung des Filterschlauches realisiert, die insbesondere bezogen auf die Filterschlauchlängsachse eine schräg verlaufende Faltenkante aufweisen, so dass axial herangeführtes Fluid aus der Achsrichtung in Umfangsrichtung abgelenkt und hierdurch ein Drall erzeugt wird.

### Kurze Beschreibung der Zeichnungen

Weitere Vorteile und zweckmäßige Ausführungen sind den weiteren Ansprüchen, der Figurenbeschreibung und den Zeichnungen zu entnehmen.
Es zeigen:
Fig. 1 eine schematisch Darstellung einer Filtereinrichtung mit einem Leitrohr, gebildet aus einem radial größeren und einem radial kleineren Rohrabschnitt, wobei in dem Leitrohr ein schlauchförmiges Filterelement angeordnet ist, das von herangeführtem, gasförmigem Fluid radial von außen nach innen durchströmt wird,
Fig. 2 eine Filtereinrichtung in alternativer Ausrichtung mit konusförmigem Filterschlauch im Leitrohr, wobei der Filterschlauch von dem Fluid radial von innen nach außen durchströmt wird,
Fig. 3 einen Filterschlauch in Seitenansicht mit spiralförmigen Falten in der Filterwandung,
Fig. 4 eine schematische Darstellung eines Filterschlauchs in Draufsicht mit schematisch eingezeichnetem Verlauf der spiralförmigen Falten.

### Ausführungsformen der Erfindung

Die in den Ausführungsbeispielen dargestellten Filtereinrichtungen sind zur Filtrierung von gasförmigen Fluiden, insbesondere der Verbrennungsluft von Brennkraftmaschinen vorgesehen. Die Filterelemente in den Filtereinrichtungen bestehen bevorzugt aus einem nachgiebigen, synthetischen Material wie Vlies auf Polymerbasis, oder gegebenenfalls auch aus natürlichem Material, beispielsweise auf Zellstoffbasis, und sind als verformbarer Filterschlauch ausgeführt. Das Filtermedium kann aber auch in sich steif ausgeführt sein und die entsprechende Geometrie durch Einbringung von Falten erreichen.

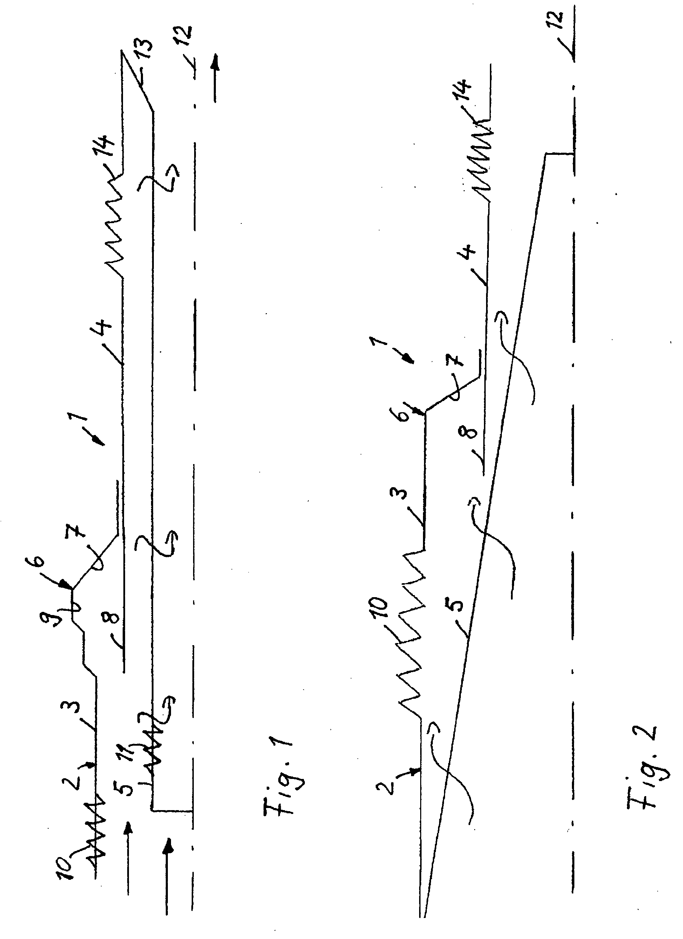

Die in Fig. 1 dargestellte Filtereinrichtung 1 umfasst ein Leitrohr 2, das als Filtergehäuse fungiert und in dem ein schlauchförmiges Filterelement 5 aufgenommen ist. Das Leitrohr 2 ist zweiteilig aufgebaut und umfasst einen ersten Rohrabschnitt 3 mit einem größeren Durchmesser und einen zweiten Rohrabschnitt 4 mit kleinerem Durchmesser. Die beiden Rohrabschnitte 3 und 4 sind miteinander verbunden, so dass im Rohrinneren ein axial durchgehender Strömungsweg gebildet ist. Die beiden Rohrabschnitte sind zweckmäßig als separate Bauteile ausgeführt, die durch geeignete Befestigungsmaßnahmen miteinander verbunden werden, beispielsweise mittels einer Schnapptechnik. Gegebenenfalls kommt aber auch eine einteilige Ausführung der beiden Rohrabschnitte 3 und 4 in Betracht.

Das schlauchförmige Filterelement 5 erstreckt sich im Inneren der beiden Rohrabschnitte 3 und 4 und ragt axial in jeden der beiden Rohrabschnitte ein. Das zu reinigende, gasförmige Fluid wird wie mit den Pfeilrichtungen angedeutet axial über den größeren Rohrabschnitt 3 herangeführt und strömt zunächst in den Ringraum zwischen dem Außenmantel des Filterelementes 5 und der Innenwandung des größeren Rohrabschnittes 3. Das schlauchförmige Filterelement 5 ist in dieser Ausführung zylindrisch ausgeführt, wobei die Wandung des Filterelementes 5 die außen liegende Rohseite von der innenliegenden Reinseite separiert.

Der Übergangsbereich 6 zwischen größerem Rohrabschnitt 3 zu kleinerem Rohrabschnitt 4 ist als Abscheidebereich für die Abscheidung von größeren, flüssigen und/oder festen Partikeln im herangeführten Fluidstrom ausgebildet. Der Übergang zwischen den Rohrabschnitten erfolgt nicht sprungartig, sondern über eine sich konisch verjüngende Wandung 7 kontinuierlich, wobei diese Wandung 7 eine Prallwand für die axial herangeführten Partikel im Fluidstrom bildet. Diese Prallwand kann auch in radialer Richtung orientiert sein. Die Außenwand des größeren Rohrabschnittes 4 ist dieser Abscheidewandung 8 axial vorgelagert und mit einer radialen Erweiterung 9 versehen, in der sich die Partikel anlagern können und aus der diese angelagerten Partikel nach außen abgeführt werden. Die radiale Erweiterung 9 kann mehrere Stufen unterschiedlichen Durchmessers aufweisen.

Radial nach innen ist der Abscheideraum, der der Prallwand 7 unmittelbar vorgelagert ist, von einer Abscheidewandung 8 begrenzt, welche das schlauchförmige Filterelement 5 umgreift. Diese Abscheidewandung 8 ist Bestandteil der Rohrwandung des kleineren Rohrabschnittes 4, der nach Art eines Rohrstutzens in den größeren Rohrabschnitt einragt. Durch die Abscheidewandung 8, die Prallwand 7 und die radiale Erweiterung 9 wird ein Abscheideraum begrenzt, der axial in Richtung des herangeführten Fluidstromes geöffnet ist.

Für eine wirksame Abscheidung ist es zweckmäßig, den axial herangeführten Fluidstrom mit einem Drall zu versehen, durch den dem Fluidstrom eine Rotationsbewegung aufgeprägt wird. Durch die Rotation werden die mitgeführten, gröberen Partikel aufgrund der auf sie wirkenden Fliehkräfte radial nach außen geschleudert, was die Ablagerung in dem Abscheideraum erheblich verbessert.

Zur Erzeugung des Dralls sind eine oder mehrere Dralleinrichtungen vorgesehen, die auf den axial herangeführten Fluidstrom wirken. Als Dralleinrichtung kommt beispielsweise ein wellenförmiger Wandabschnitt 10 in der Wandung des größeren Rohrabschnittes 3 in Betracht, wobei die Wellen 10 insbesondere Spiralform aufweisen, was die Ausbildung eines Dralls in dem Fluidstrom erheblich verbessert. Alternativ oder zusätzlich zu den Wellen 10 in der Wandung des größeren Rohrabschnittes können Falten 11 in die Wandung des zylindrischen und schlauchförmigen Filterelementes 5 eingebracht sein. Diese Falten 11 besitzen zweckmäßig Faltenkanten mit einer Richtungskomponente in einem Winkel zur Längsachse 12 der Filtereinrichtung, so dass der auf die Falten axial auftreffende Fluidstrom mit einer Komponente in Umfangsrichtung abgelenkt wird und dadurch in Rotation versetzt wird. Eine radiale Richtungskomponente in den Falten unterstützt zusätzlich die Ablenkung des Fluidstroms radial nach außen. Möglich ist aber auch eine Ausführung der Falten 11 in der Wandung des Filterelements 5 in Spiralform.

Der Durchmesser des schlauchförmigen Filterelementes 5 ist geringer als der Durchmesser des Innenmantels des kleineren Rohrabschnittes 4, so dass zwischen Außenseite des Filterelementes 5 und Innenmantel des Rohrabschnittes 4 ein Ringraum gebildet ist, in welchem der Fluidstrom entlang strömen kann. Die axiale Strömung des Fluistromes in diesem Ringraum ist durch eine Begrenzungswand 13 zwischen dem Filterelement 5 und der Innenwandung am kleineren Rohrabschnitt 4 begrenzt. Dadurch ist das Fluid gezwungen, in dem Ringraum zwischen Filterelement 5 und Innenmantel des Rohrabschnitts radial die Wandung des Filterelementes 5 zu durchströmen und auf der inneren Reinseite des Filterelementes axial abzuströmen. In die Wandung des kleineren Rohrabschnittes 4 können ebenso wie im größeren Rohrabschnitt 3 Wellen 14 eingebracht sein, die insbesondere spiralförmig ausgebildet sind. Darüber hinaus können mithilfe dieser Wellen Auslenkungen aus der Achsrichtung, welche das Filterelement axial vor den Wellen hat, realisiert werden.

Im Ausführungsbeispiel nach Fig. 2 sind Bauteile, die mit dem Ausführungsbeispiel nach Fig. 1 identisch sind, mit gleichen Bezugszeichen versehen.

Das Filterelement 5 ist im Ausführungsbeispiel nach Fig. 2 ebenfalls schlauchförmig ausgebildet, es weist aber im Unterschied zum vorhergehenden Ausführungsbeispiel eine konisch in Strömungsrichtung sich verjüngende Geometrie auf, so dass sich der Querschnitt des Filterelementes 5 in axialer Strömungsrichtung gesehen kontinuierlich verringert. Der noch nicht gereinigte Fluidstrom wird axial über den Innenraum des Filterelements 5 herangeführt, der die Rohseite darstellt. Aufgrund der bezogen auf die Längsachse 12 schräg verlaufenden Wandung des Filterelementes 5 tritt der Fluidstrom radial durch die Wandung hindurch und wird hierbei einer ersten Reinigung unterzogen. Nach dem Durchtritt befindet sich das Fluid in dem Ringraum zwischen dem Außenmantel des Filterelementes 5 und dem Innenmantel des größeren Rohrabschnittes 3 bzw. des kleineren Rohrabschnittes 4, abhängig von der axialen Position des Durchtritts durch die Wandung des Filterelementes. Die Abscheidewandung 8, die den Abscheideraum radial nach innen begrenzt, ist wie im vorangegangenen Ausführungsbeispiel als Rohrstutzenende des kleineren Rohrabschnittes 4 ausgebildet, das in das Innere des größeren Rohrabschnittes 3 einragt. Dieser Fall hier zeigt den akustischen Vorteil, der mit der Erfindung erreicht wird. Zwischen der Stirnseite der Abscheidewandung 8 und dem Außenmantel des schlauchförmigen, konisch zulaufenden Filterelementes 5 ist ein ausreichend großer Durchtritt gegeben, so dass der Fluidstrom über diesen Durchtritt vom größeren Rohrabschnitt 3 axial in den kleineren Rohrabschnitt 4 überströmen kann.

In beiden Ausführungsbeispielen bewirkt der Übergangsbereich 6 zwischen den Rohrabschnitten 3 und 4 zusätzlich zur Abscheidung von flüssigen oder festen Partikeln im Fluidstrom auch eine Geräuschreduzierung.

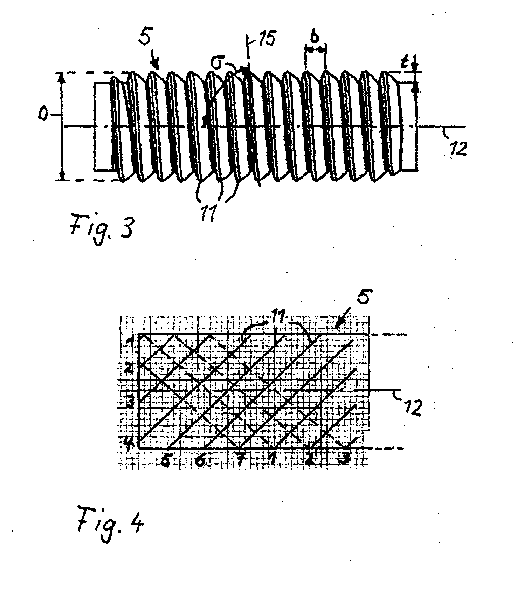

Der in Fig. 3 dargestellte Filterschlauch 5 weist in der Filterwandung Falten 11 auf, die sich spiralförmig um die Längsachse 12 winden und somit eine Richtungskomponente in Längsrichtung des Filterschlauchs 5 aufweisen. Diese spiralförmigen Falten 11 verleihen dem Filterschlauch 5 eine Verformungsmöglichkeit sowohl in Achsrichtung, wodurch der Filterschlauch gestaucht oder gelängt werden kann, als auch in Radialrichtung. Zugleich weist dieser Filterschlauch eine hohe Stabilität auf, wodurch eine Fertigung des Filterschlauchs beispielsweise aus einem natürlichen oder synthetischen Filtermaterial, insbesondere auf Polymerbasis, in Betracht kommt.

Dargestellt ist in Fig. 3 der Steigungswinkel σ, mit dem der Winkel zwischen der Längsachse 12 des Filterschlauchs 5 und einer verbindenden Geraden 15 zwischen zwei um 180° winkelversetzten, auf gegenüberliegenden Umfangsseiten liegenden Faltenspitzen einer durchgehenden Falte bezeichnet wird. Der Steigungswinkel σ liegt bevorzugt in einem Winkelbereich zwischen 30° und 85°. Im Ausführungsbeispiel beträgt σ etwa 85°.

Die Faltenteilung b zwischen zwei unmittelbar benachbarten Falten liegt vorteilhaft in einem Wertebereich zwischen 10 % und 50 % des Außendurchmessers D des Filterschlauchs 5. Im Ausführungsbeispiel beträgt die Faltenteilung b knapp 20 % des Außendurchmessers D.

Die Faltentiefie t, mit der der radiale Abstand zwischen dem Faltengrund und der Faltenspitze einer Falte 11 bezeichnet ist, liegt zweckmäßig in einem Wertebereich zwischen 5 % und 25 % des Außendurchmessers D des Filterschlauchs 5. Im Ausführungsbeispiel beträgt die Faltentiefe etwas mehr als 10 % des Außendurchmessers D.

Wie der schematischen Darstellung nach Fig. 4 zu entnehmen, können eine Mehrzahl zueinander parallel verlaufender und sich spiralförmig in der Wandung um die Längsachse 12 windender Falten 11 vorgesehen sein. Horizontal und vertikal sind in Fig. 4 die einzelnen Falten mit Bezugsziffern zwischen 1 und 7 durchnummeriert, wobei die Falten mit durchgezogenem Strich die sichtbaren, oben liegenden Faltenkanten und die Falten mit strichlierter Linie die zugehörigen, auf der Gegenseite verlaufenden, dem Betrachter abgewandten Faltenkanten darstellen. In dem Ausführungsbeispiel nach Fig. 4 sind insgesamt sieben parallel zueinander verlaufender und sich spiralförmig windender Falten 3 im Filterschlauch vorgesehen.

Die Filtereinrichtung eignet sich insbesondere für die Filtration von Verbrennungsluft in Brennkraftmaschinen. Es ist aber auch eine Anwendung für die Filtration der Fahrzeuginnenraumluft oder allgemein für die Filtration in Fahrzeugen möglich.

## Patentansprüche

1. Filtereinrichtung, insbesondere zur Filtration von Verbrennungsluft in Brennkraftmaschinen, mit einem in einem Filtergehäuse angeordneten Filterelement (5), **dadurch gekennzeichnet, dass** das Filterelement (5) schlauchförmig ausgebildet ist, wobei die Wandung des Filterelements (5) die Rohseite und die Reinseite radial separiert, dass das Filterelement (5) in einem Leitrohr (2) mit zwei Rohrabschnitten (3, 4) unterschiedlichen Durchmessers angeordnet ist in deren Übergang (6) eine Ringschulter zur Abscheidung von Partikeln angeordnet ist, wobei das ungereinigte Fluid über den größeren Rohrabschnitt (3) heranführbar ist und das Filterelement (5) sich zumindest teilweise in diesen größeren Rohrabschnitt (3) erstreckt, und dass sich in dem größeren Rohrabschnitt (3) eine Dralleinrichtung zur Erzeugung eines Dralls in dem herangeführten Fluidstrom befindet zur Abscheidung von Partikeln aufgrund von Fliehkräften durch radiales nach außen Leiten, wobei beide Rohrabschnitte (3,4) entweder auf der Rohseite oder der Reinseite des Filterelements (5) gebildet sind.

2. Filtereinrichtung nach Anspruch 1, **dadurch gekennzeichnet, dass** das Filterelement (5) sich bis in den Rohrabschnitt des kleineren Durchmessers (4) erstreckt.

3. Filtereinrichtung nach Anspruch 1 oder 2, **dadurch gekennzeichnet, dass** die Dralleinrichtung Bestandteil der Wandung des schlauchförmigen Filterelements (5) ist.

4. Filtereinrichtung nach Anspruch 3, **dadurch gekennzeichnet, dass** die Dralleinrichtung in Form von Falten (11) ausgebildet ist, die in die Wandung des Filterelements (5) eingebracht sind.

5. Filtereinrichtung nach einem der Ansprüche 1 bis 4, **dadurch gekennzeichnet, dass** die Dralleinrichtung auf der Innenseite des größeren Rohrabschnitts (3) angeordnet ist.

6. Filtereinrichtung nach einem der Ansprüche 1 bis 5, **dadurch gekennzeichnet, dass** die radiale Außenseite des Filterelements (5) die Rohseite bildet und das ungereinigte Fluid die Wandung des Filterelements (5) radial von außen nach innen durchströmt.

7. Filtereinrichtung nach einem der Ansprüche 1 bis 6, **dadurch gekennzeichnet, dass** im Übergang zwischen den Rohrabschnitten (3, 4) eine Abscheidewandung (8) im Leitrohr (2) angeordnet ist.

8. Filtereinrichtung nach einem der Ansprüche 1 bis 7, **dadurch gekennzeichnet, dass** die Rohrabschnitte (3, 4) des Leitrohrs (2) als separate Bauteile ausgeführt sind, die miteinander verbunden sind.

9. Filtereinrichtung nach Anspruch 7 und 8, **dadurch gekennzeichnet, dass** der kleinere Rohrabschnitt (4) in den größeren Rohrabschnitt (3) einragt und die Abscheidewandung (8) von dem einragenden Teil des kleineren Rohrabschnitts (4) gebildet ist.

10. Filtereinrichtung nach einem der Ansprüche 1 bis 9, **dadurch gekennzeichnet, dass** die Wandung mindestens eines Rohrabschnitts (3, 4) zumindest teilweise gewellt ausgeführt ist.

11. Filtereinrichtung nach einem der Ansprüche 1 bis 10, **dadurch gekennzeichnet, dass** das Filterelement (5) zylindrisch ausgebildet ist.

12. Filtereinrichtung nach Anspruch 11, **dadurch gekennzeichnet, dass** der Durchmesser des Filterelements (5) geringer ist als der Durchmesser des kleineren Rohrabschnitts (4) des Leitrohrs (2).

13. Filtereinrichtung nach einem der Ansprüche 1 bis 10, **dadurch gekennzeichnet, dass** das Filterelement (5) konisch ausgebildet ist.

14. Filtereinrichtung nach einem der Ansprüche 1 bis 13, **dadurch gekennzeichnet, dass** axial benachbart zum Übergangsbereich (6) zwischen den Rohrabschnitten (3, 4) in die Wandung des größeren Rohrabschnitts (3) eine radiale Erweiterung (9) eingebracht ist.

15. Filtereinrichtung nach einem der Ansprüche 1 bis 14, mit einem als Filterschlauch ausgebildeten Filterelement (5), dessen Filterwandung die Rohvon der Reinseite radial separiert, **dadurch gekennzeichnet, dass** in die Filterwandung des Filterschlauchs (5) Falten (11) eingebracht sind, die spiralförmig um die Filterlängsachse (12) verlaufen.

## Claims

1. Filtering device, in particular for filtering combustion air in internal combustion engines, with a filter element (5) disposed in a filter housing, **characterized in that** the filter element (5) has a tube-shape design, the wall of the filter element (5) separating the raw air side and the clean side radially, **in that** the filter element (5) is disposed in a guide tube (2) with two tube sections (3, 4) of different diameters with an annular shoulder in their transition (6) for separating particles, the unfiltered fluid being led via the larger tube section (3) and the filter element (5) extending at least partially into this larger tube section (3) and **in that** in the larger tube section (3) a swirl device for generating a swirl in the incoming fluid flow is disposed for separating particles by means of centrifugal forces by leading it radially outwards, both tube sections (3, 4) being formed either at the raw air side or at the clean side of the filter element (5).

2. Filtering device according to claim 1, **characterized in that** the filter element (5) extends into the tube section of the smaller diameter (4).

3. Filtering device according to claim 1or 2, **characterized in that** the swirl device is part of the wall of the tube-shaped filter element (5).

4. Filtering device according to claim 3, **characterized in that** the swirl device has the shape of pleats (11) which are incorporated into the wall of the filter element (5).

5. Filtering device according to one of the claims 1 to 4, **characterized in that** the swirl device is disposed at the interior side of the larger tube section (3).

6. Filtering device according to one of the claims 1 to 5, **characterized in that** the radial exterior side of the filter element (5) forms the raw air side and the unfiltered fluid flows radially from outside to inside through the wall of the filter element (5).

7. Filtering device according to one of the claims 1 to 6, **characterized in that** in the transition between the tube sections (3, 4) a separating wall (8) is disposed in the guide tube (2).

8. Filtering device according to one of the claims 1 to 7, **characterized in that** the tube sections (3, 4) of the guide tube (2) are designed as separate components which are connected with each other.

9. Filtering device according to claim 7 and 8, **characterized in that** the smaller tube section (4) projects into the larger tube section (3) and that the separating wall (8) is formed by the projecting part of the smaller tube section (4).

10. Filtering device according to one of the claims 1 to 9, **characterized in that** the wall of at least one tube section (3, 4) has at least partially a corrugated shape.

11. Filtering device according to one of the claims 1 to 10, **characterized in that** the filter element (5) is of cylindrical shape.

12. Filtering device according to claim 11, **characterized in that** the diameter of the filter element (5) is smaller than the diameter of the smaller tube section (4) of the guide tube (2).

13. Filtering device according to one of the claims 1 to 10, **characterized in that** the filter element (5) is of conical shape.

14. Filtering device according to one of the claims 1 to 13, **characterized in that** axially adjacent to the transition area (6) between the tube sections (3, 4) a radial extension (9) is inserted into the wall of the larger tube section (3).

15. Filtering device according to one of the claims 1 to 14, with a filter element (5) designed as filter hose, the filter wall of which separates the raw air side from the clean side radially, **characterized in that** pleats (11) are incorporated into the filter wall of the filter hose (5) which runs spirally around the longitudinal filter axis (12).

## Revendications

1. Dispositif de filtration, destiné en particulier à la filtration d'air de combustion dans les moteurs à combustion interne, avec un élément filtrant (5) disposé dans un boîtier de filtre, **caractérisé en ce que** l'élément filtrant (5) a la forme d'un tuyau, la paroi de l'élément filtrant (5) séparant en sens radial le côté non filtré du côté filtré, **en ce que** l'élément filtrant (5) est disposé dans un tube de guidage (2) avec deux sections de tube (3, 4) de différents diamètres et dans la transition (6) desquels est disposé un épaulement annulaire en vue de la séparation de particules, le fluide non nettoyé pouvant être amené par la grande section de tube (3) et l'élément filtrant (5) s'étendant, tout au moins partiellement, dans cette grande section de tube (3), et **en ce que**, dans cette grande section de tube (3), se trouve un dispositif de tourbillon destiné à générer un tourbillon dans le flux de fluide amené en vue de séparer les particules, sous l'effet de forces centrifuges, par évacuation radiale vers l'extérieur, les deux sections de tube (3, 4) étant formées soit du côté non filtré soit du côté filtré de l'élément filtrant (5).

2. Dispositif de filtration selon la revendication 1, **caractérisé en ce que** l'élément filtrant (5) s'étend jusque dans la section de tube de petit diamètre (4).

3. Dispositif de filtration selon la revendication 1 ou 2, **caractérisé en ce que** le dispositif de tourbillon fait partie intégrante de la paroi de l'élément filtrant (5) en forme de tuyau.

4. Dispositif de filtration selon la revendication 3, **caractérisé en ce que** le dispositif de tourbillon a la forme de plis (11) qui sont intégrés à la paroi de l'élément filtrant (5).

5. Dispositif de filtration selon l'une des revendications 1 à 4, **caractérisé en ce que** le dispositif de tourbillon est disposé du côté intérieur de la grande section de tube (3).

6. Dispositif de filtration selon l'une des revendications 1 à 5, **caractérisé en ce que** le côté extérieur radial de l'élément filtrant (5) constitue le côté non filtré et le fluide non nettoyé traverse de l'extérieur vers l'intérieur la paroi de l'élément filtrant (5) en sens radial.

7. Dispositif de filtration selon l'une des revendications 1 à 6, **caractérisé en ce qu'**une paroi de séparation (8) est disposée dans le tube de guidage (2) dans la transition entre les sections de tube (3, 4).

8. Dispositif de filtration selon l'une des revendications 1 à 7, **caractérisé en ce que** les sections de tube (3, 4) du tube de guidage (2) sont réalisées en tant que composants séparés reliés l'un à l'autre.

9. Dispositif de filtration selon les revendications 7 et 8, **caractérisé en ce que** la petite section de tube (4) pénètre dans la grande section de tube (3) et que la paroi de séparation (8) est formée par la partie pénétrante de la petite section de tube (4).

10. Dispositif de filtration selon l'une des revendications 1 à 9, **caractérisé en ce que** la paroi d'au moins une section de tube (3, 4) est ondulée, tout au moins partiellement.

11. Dispositif de filtration selon l'une des revendications 1 à 10, **caractérisé en ce que** l'élément filtrant (5) a une forme cylindrique.

12. Dispositif de filtration selon la revendication 11, **caractérisé en ce que** le diamètre de l'élément filtrant (5) est inférieur au diamètre de la petite section de tube (4) du tube de guidage (2).

13. Dispositif de filtration selon l'une des revendications 1 à 10, **caractérisé en ce que** l'élément filtrant (5) a une forme conique.

14. Dispositif de filtration selon l'une des revendications 1 à 13, **caractérisé en ce que**, à proximité axiale de la zone de transition (6) entre les sections de tube (3, 4), une extension radiale (9) est insérée dans la paroi de la grande section de tube (3).

15. Dispositif de filtration selon l'une des revendications 1 à 14, avec un élément filtrant (5) réalisé en tant que tuyau de filtration, dont la paroi filtrante sépare le côté non filtré du côté filtré en sens radial, **caractérisé en ce que** des plis (11) évoluant en spirale autour de l'axe longitudinal du filtre (12) sont intégrés à la paroi filtrante du tuyau de filtration (5).
